# EUROPEAN PATENT APPLICATION

(11) **EP 4 831 587 A1**
(43) Date of publication of application: **28.10.2026**
(21) Application number: 26171957.9
(22) Date of filing: 13.04.2026
(51) Int. Cl.: G01C 21/00, G06F 16/29

(54) **METHODS, APPARATUSES, CONTROLLERS, AND COMPUTER PROGRAM PRODUCTS FOR GENERATING MAPS OF INTERSECTIONS**

(30) Priority: 21.04.2025 CN 202510503536
(71) Applicant: Robert Bosch GmbH, 70442 Stuttgart (DE)
(72) Inventor: WANG, Leichen, Shanghai, 200335 (CN)

(57) **Abstract**

The present disclosure relates to a method, apparatus, controller, and computer program product for generating a map of an intersection. The method comprises determining the intersection type based on intersection-related information and an intersection knowledge base, the intersection knowledge base containing information on various types of intersections. The method further comprises generating a second map of the intersection based on the intersection type of the intersection and a first map of the intersection, the first map having lower informational richness and/or precision than the second map. In this way, the integration of an intersection map with low precision and/or informational richness and an intersection knowledge base reduces the complexity of building a high-definition intersection map and provides real-time intersection information.

## Description

### Technical Field

The present disclosure relates to the field of traffic engineering, and more particularly to a method, apparatus, controller, and computer program product for generating a map of an intersection.

### Background

During autonomous driving, intersections are one of the most complex parts of the traffic scenario. High-definition maps (also referred to as "HD maps" herein) can provide detailed lane information at an intersection, including the number of lanes, lane width, and lane direction (such as straight lanes, left-turn lanes, right-turn lanes, etc.). For example, when a vehicle approaches a large intersection with multiple forks, a high-definition map can allow the vehicle to know the specific function of each lane in advance, thereby accurately planning the driving route and deciding whether to continue straight, turn left, or turn right. In addition, blind spots at intersections are one of the major causes of traffic accidents. High-definition maps can be combined with data from the vehicle's own sensors to provide early warnings of vehicles, pedestrians, or other obstacles that may appear in blind spots, thus ensuring safe driving.

### Summary of the Invention

Examples of the present disclosure provide a method, an apparatus, a controller, a vehicle, and a computer program product for generating a map of an intersection.

In a first aspect of the present disclosure, a method for generating a map of an intersection is provided. The method comprises determining the intersection type based on intersection-related information and an intersection knowledge base, the intersection knowledge base containing information on various types of intersections. The method further comprises generating a second map of the intersection based on the intersection type and a first map of the intersection, the first map having lower informational richness and/or precision than the second map.

In a second aspect of the present disclosure, an apparatus for generating a map of an intersection is provided. The apparatus comprises an intersection type generation unit configured to determine the intersection type based on intersection-related information and an intersection knowledge base, the intersection knowledge base containing information on various types of intersections. The apparatus further comprises a second map generation unit configured to generate a second map of the intersection based on the intersection type and a first map of the intersection, the first map having lower informational richness and/or precision than the second map.

In a third aspect of the present disclosure, a controller is provided. The controller comprises at least one processor; and a memory coupled to the at least one processor and having instructions stored thereon that, when executed by the at least one processor, cause the controller to implement the method for generating a map of an intersection. The method comprises determining the intersection type based on intersection-related information and an intersection knowledge base, the intersection knowledge base containing information on various types of intersections. The method further comprises generating a second map of the intersection based on the intersection type and a first map of the intersection, the first map having lower informational richness and/or precision than the second map.

In a fourth aspect of the present disclosure, a computer program product is provided. The computer program product is tangibly stored on a non-transitory computer readable medium and comprises machine executable instructions that, when executed, cause a machine to implement a method for generating a map of an intersection. The method comprises determining the intersection type based on intersection-related information and an intersection knowledge base, the intersection knowledge base containing information on various types of intersections. The method further comprises generating a second map of the intersection based on the intersection type and a first map of the intersection, the first map having lower informational richness and/or precision than the second map.

In a fifth aspect of the present disclosure, a computer-readable storage medium is provided. The computer-readable storage medium has computer-executable instructions stored thereon, wherein the computer-executable instructions are executed by a processor to implement the method provided according to the first aspect of the present disclosure.

According to a sixth aspect of the present disclosure, a vehicle is provided. The vehicle comprises a controller provided in accordance with the third aspect of the present disclosure, wherein the controller is capable of performing the method provided in accordance with the first aspect of the present disclosure.

In a seventh aspect of the present disclosure, a computer-readable storage medium is provided. The computer-readable storage medium comprises computer-executable instructions, wherein the computer-executable instructions are used to cause a processor to perform the method provided according to the first aspect of the present disclosure.

It will be understood that the content described in the Summary of the Invention is not intended to limit key or important features of the examples of the present disclosure, nor is it intended to limit the scope of the present disclosure. Other features of the present disclosure will become readily understood by the following description.

### Brief Description of the Drawings

The above and other features, advantages and aspects of various examples of the present disclosure will become more apparent in combination with the accompanying drawings and with reference to the following detailed description. In the accompanying drawings, the same or similar reference numerals denote the same or similar elements, wherein:
FIG. 1 shows a schematic diagram of the lane topology at a typical intersection;
In FIG. 2, (a) shows a camera image, (b) shows a high-definition map, and (c) shows a standard-definition map;
FIG. 3 is a schematic diagram of an example environment in which some examples of the present disclosure may be implemented;
FIG. 4 shows a flow chart of a method for generating a map of an intersection according to some examples of the present disclosure;
FIG. 5 shows a schematic diagram of an example of generating a map of an intersection according to some examples of the present disclosure;
FIG. 6 shows a schematic diagram of an example of generating the intersection type of an intersection according to some examples of the present disclosure;
FIG. 7 shows the intersection types included in the intersection knowledge base according to some examples of the present disclosure;
FIG. 8 shows a schematic diagram of an example of generating additional information about an intersection according to some examples of the present disclosure;
FIG. 9 shows an example of a complex intersection;
FIG. 10 shows a schematic diagram of generating virtual lane lines of an intersection according to some examples of the present disclosure;
FIG. 11 shows a schematic diagram of a four-way intersection on an open street map;
FIG. 12 shows an apparatus for generating a map of an intersection according to some examples of the present disclosure; and
FIG. 13 is a schematic diagram of a controller according to some examples of the present disclosure.

In all figures, like or similar reference signs represent like or similar elements.

### Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to." The term "based on" should be understood as "at least partially based on." The term "one example" or "this example" should be understood as "at least one example." The terms "first," "second," etc. may refer to different objects or the same object. Other explicit and implicit definitions may be included below.

As mentioned above, high-definition maps of intersections can improve the safety of autonomous driving and optimize the driving efficiency of autonomous vehicles. Thus, building high-definition maps of intersections is of great significance. However, the cost of building and maintaining high-definition maps is high. First, the cost of data collection is high, as building high-definition maps requires the use of a variety of high-precision sensor devices. For example, LiDAR is one of the core devices for collecting map data, and high-precision LiDAR is very expensive, typically ranging from tens of thousands to hundreds of thousands of dollars. These devices also require regular calibration and maintenance, which adds to the cost of device use. Second, data processing costs are high. On the one hand, the data volume is large and complex, and massive amounts of data require powerful storage systems to store them. On the other hand, high-performance computer devices and professional software tools are needed during processing. Furthermore, different sensors have different data formats and characteristics, which require complex data fusion and processing. This requires specialized data processing personnel and advanced algorithms, adding labor and technical costs.

To reduce the cost of building and maintaining high-definition maps, existing technologies use road-level navigation maps, images, and a certain amount of common sense to reconstruct the topology of intersections. However, it is difficult to reconstruct intersection information when visibility is low or there are obstructions. Although some existing technologies use large models to provide prior information about intersections, real-time performance remains a significant challenge.

To this end, the disclosure proposes a solution for generating a map of an intersection. In the examples of the present disclosure, the solution is capable of building high-definition maps of intersections using relevant information about intersections, an intersection knowledge base, and low-definition intersection maps. In this way, the complexity of building high-definition maps is reduced and real-time intersection information is provided.

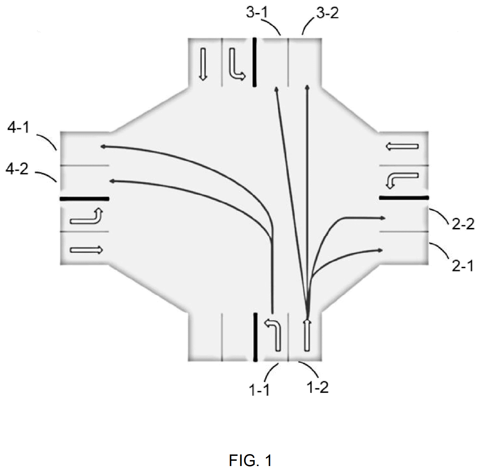

Lane topology and its application in Advanced Driver-Assistance Systems (ADAS) are illustrated below with reference to FIG. 1. Lane topology refers to a systematic way of describing the relationships between lanes in a road, such as their interconnection, intersection, merging, and branching. It details the spatial layout and logical relationships of lanes at intersections, highway entrances and exits, ramps, and other locations, demonstrating how lanes are organized within the entire transportation system.

FIG. 1 shows a schematic diagram of the land topology at a typical intersection. In FIG. 1, for example, left-turn lane 1-1 has a connection relationship with lanes 4-1 and 4-2, meaning that when a vehicle is in left-turn lane 1-1, it can turn left into lanes 4-1 and 4-2. For example, straight lane 1-2 has a connection relationship with lanes 2-1, 2-2, 3-1, and 3-2, meaning that when a vehicle is in straight lane 1-2, it can either drive straight into lanes 3-1 and 3-2 or turn right into lanes 2-1 and 2-2.

By utilizing land topology, ADAS can provide more accurate path guidance. For example, when a vehicle approaches a large interchange with multiple branching points, the system can accurately determine which lane to drive in advance based on lane topology information, avoiding detours or traffic violations caused by driving in the wrong lane. Real-time lane topology also helps ADAS dynamically adjust driving routes. For example, on highways, the system can use the topological relationships between ramps and adjacent lanes to guide vehicles to leave congested sections in advance and enter other uncongested lanes via appropriate connecting roads. In addition, ADAS can use lane topology information to predict the movement trajectories of other vehicles and pedestrians in advance.

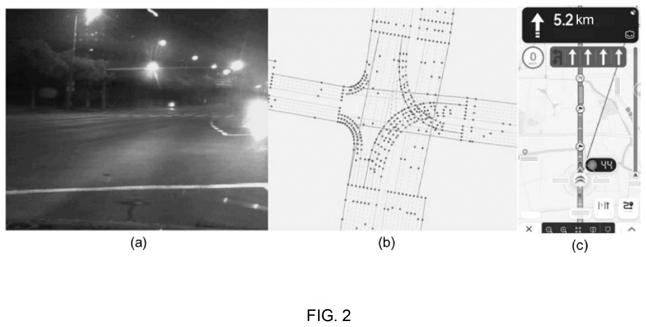

In order to build or acquire lane topology, it is often necessary to obtain lane information. Lane information can come from several datasets that provide real-world and large-scale 3D lane data, such as OpenLane and OpenLane-V2, or from lane perception, such as camera-based lane perception and LiDAR-based lane perception. In FIG. 2, (a) shows a road image captured by a camera. Lane lines are detected by recognizing the image using an image recognition algorithm.

High-definition maps may provide lane topology information directly, such as the high-definition map shown by (b) in FIG. 2. High-definition maps are maps with high accuracy and rich road information, with an accuracy that can reach the centimeter level. For example, when depicting lane lines on a road, they can accurately represent the position, shape, and width of the lane lines with minimal error. High-definition maps can also accurately mark the locations of other traffic facilities on the road, such as traffic signs and lampposts. In terms of informational richness, high-definition maps can not only distinguish different types of lanes, such as motor vehicle lanes, non-motor vehicle lanes, and bus lanes, but also provide the driving direction (one-way or two-way) and lane attributes for each lane. At intersections, high-definition maps will clearly indicate lane turning information, such as which lanes are dedicated left-turn lanes and which are straight/right-turn lanes. In addition, high-definition maps can further provide traffic rule information and traffic control information for specific road sections and also cover environmental information around the road.

Unlike high-definition maps that include lane topology (or lane information), standard-definition maps (also referred to as "SD maps" herein) do not have complete semantic and geometric lane details, but only provide road-level topology (or road information), as shown by (c) in FIG. 2. Standard-definition maps are maps that provide basic road information and common traffic elements. Their precision is lower than that of high-definition maps, generally at the meter level. They mainly meet the needs of ordinary navigation and basic traffic information queries and consist of road network information, traffic facility information, and geographic information.

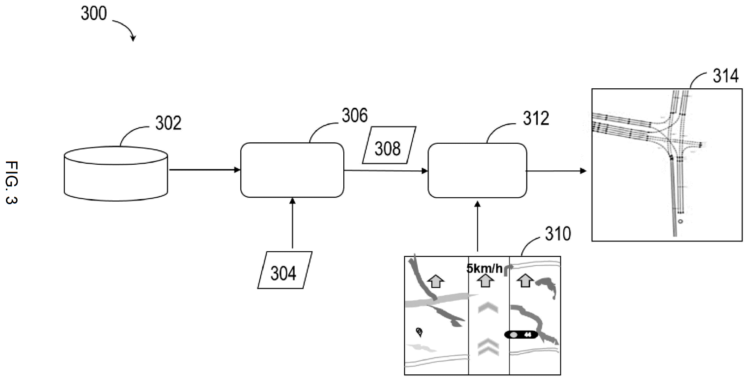

An example framework of the solution of the present disclosure is illustrated below with reference to FIG. 3. FIG. 3 is a schematic diagram of an example environment 300 in which some examples of the present disclosure may be implemented. The environment 300 may be, for example, a controller deployed in a vehicle. The environment 300 comprises an intersection knowledge base 302, intersection-related information 304, an intersection type determination module 306, and a second map generation module 312. The intersection knowledge base 302 comprises information on various intersection types and the intersection type determination module 306 is configured to determine the intersection type 308 of the intersection.

In the environment 300, the intersection knowledge and intersection-related information 304 in the intersection knowledge base 302 are provided to the intersection type determination module 306. The intersection type determination module 306 provides the determined intersection type 308 to the second map generation module 312 and also provides a first map 310 of the intersection to the second map generation module 312. The second map generation module 312 generates a second map 314 based on the information provided therein. The informational richness and/or precision and/or informational richness of the second map 314 are higher than the first map 310.

In the environment 300, the first map 310, which is lower in accuracy and informational richness, can provide real-time information for determining the current intersection information, because the first map 310 is updated in real time based on the current traffic conditions. The intersection knowledge base, which contains a large amount of intersection knowledge, can supplement the intersection information that the first map 310 cannot provide, helping to build the second map 314.

In this way, the intersection type determination module 306 and the second map generation module 312 effectively integrate the first map 310, which has real-time performance but low precision, and the intersection knowledge base, which does not have real-time performance but contains a large amount of intersection knowledge. This reduces the complexity of building the second map 314 with higher precision and provides real-time intersection information.

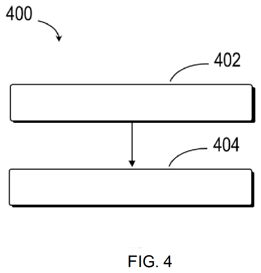

FIG. 4 shows a flow chart of a method 400 for generating a map of an intersection according to some examples of the present disclosure. In some examples, the method 400 may be performed in the example environment 300 (e.g., a controller deployed in a vehicle) described in FIG. 3. The method 400 may further comprise additional operations not shown and/or may omit the operations shown. The order of the boxes shown in the figures may vary, and the scope of the disclosure is not limited in this regard.

At block 402, the method 400 may comprise determining the intersection type based on intersection-related information and an intersection knowledge base, the intersection knowledge base containing information on various intersection types. For example, in a controller of a vehicle, the intersection type 308 is obtained by way of the intersection type determination module 306 based on the intersection-related information 304 and the intersection knowledge base 302 provided therein. In some examples, the intersection-related information 304 may be stored on in-vehicle devices (e.g., dashcams, in-vehicle navigation systems, etc.), servers of map service providers, cloud storage platforms, etc., and may comprise, for example, the locations of vehicles at the intersection, video of the intersection, and a detailed map of the intersection. In some examples, the intersection type 308 may comprise the intersection type name, the number of road directions corresponding to the intersection, and the number of lanes in each direction, and the intersection knowledge base 302 may comprise a plurality intersection types and lane information corresponding to the plurality of intersection types.

At block 404, the method 400 further comprises generating a second map of the intersection based on the intersection type and a first map of the intersection, the first map having lower informational richness and/or precision than the second map. For example, in a controller of a vehicle, a second map 314 is obtained by way of the second map generation module 312 based on the intersection type 308 and the first map 310 provided therein. In some examples, the first map 310 may be a standard-definition map and the second map 314 may be a high-definition map.

In this way, the effective integration of a low-definition intersection map and an intersection knowledge base reduces the complexity of building a high-definition intersection map and provides real-time intersection information.

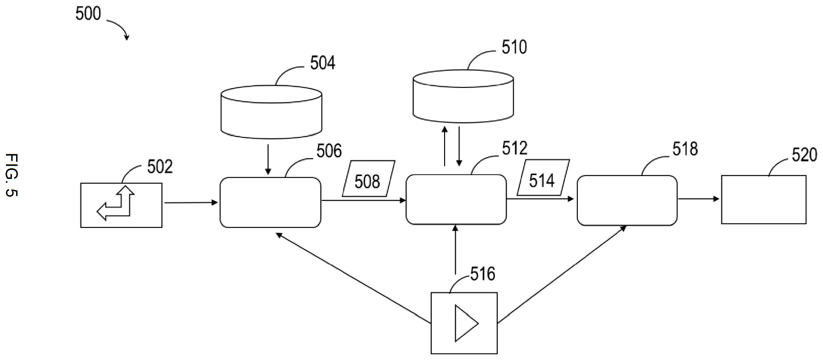

FIG. 5 shows a schematic diagram of an example 500 of generating a map of an intersection according to some examples of the present disclosure. In example 500, a first map 502, a video 516 of the intersection, and intersection knowledge in an intersection knowledge base 504 are provided to an intersection classifier 506 to obtain the intersection type 508. This, the video 516, and the knowledge in a traffic knowledge base 510 are then provided to an intersection attribute selection module 512 to obtain an intersection information subset 514, which comprises the number of roads, the number of road directions, and the number of lanes in each direction of the intersection. The intersection information subset 514 and the video 516 are then provided to a second map building module 518 to build a second map 520.

In some examples, the intersection knowledge base 504 comprises various intersection types and their corresponding lane information. The lane information comprises, for example, the number of lanes in different directions, turning information, lane length, turning radius, etc. for each type of intersection. The traffic knowledge base 510 is a database that combines locations (such as city and region) with intersections. It is also a system for storing and managing knowledge in the domain of traffic. Unlike the intersection knowledge base 504, which focuses on various intersection types and their lane information, it focuses more on general traffic information. It integrates information from multiple aspects such as traffic rules, traffic facilities, traffic behavior, road networks, and traffic management, including normal lane width, lane attributes, road markings, and geographic information (such as different traffic rules and road topology features in different cities). The combined use of the intersection knowledge base 504 and the traffic knowledge base 510 provides important support for generating high-definition and information-rich intersection maps.

In some examples, the intersection classifier 506 is a tool or software module for identifying and classifying different intersection types. It mainly classifies intersections into different categories based on various characteristics such as the intersection's geometry, traffic flow patterns, and traffic facility configuration, such as four-way intersections, T-intersections, roundabouts, Y-intersections, and five-way intersections. Its function is to provide accurate intersection type information for intelligent transportation systems, autonomous driving systems, or traffic planning analysis, so as to facilitate route planning, traffic management, and safety control.

In example 500, the intersection classifier 506 performs data feature extraction on the first map 502, the intersection video 516, and the intersection knowledge in the intersection knowledge base 504. For example, for geometric features, the angle of the intersection, the ratio of side lengths, and the curvature of the curve may be extracted; for traffic flow features, the driving direction of vehicles, the turning restrictions of lanes, and the size and distribution of traffic flow may be analyzed; for traffic facility features, information such as traffic signs (such as turning signs and yield signs) and traffic lights (number, location, and phase) may be extracted.

Using the extracted features, the intersection classifier 506 classifies intersections by way of various classification algorithms. Common classification algorithms include decision trees, support vector machines (SVM), neural networks, and the like. For example, decision tree algorithms can gradually determine the intersection type based on features such as whether the angle of the intersection is close to 90 degrees or whether there is a roundabout; neural networks, on the other hand, can be trained on a large amount of labeled intersection data to automatically learn the feature patterns of different intersection types, thereby achieving accurate classification of new intersections.

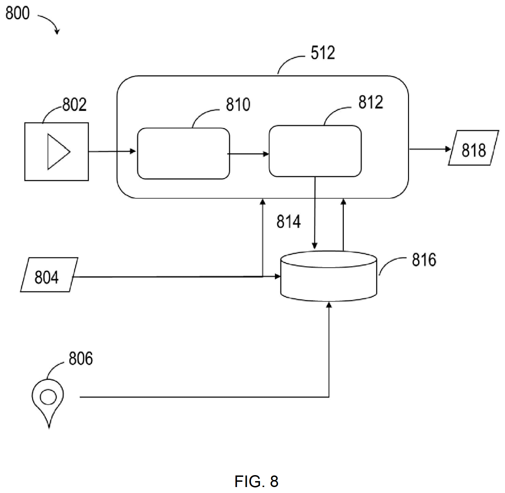

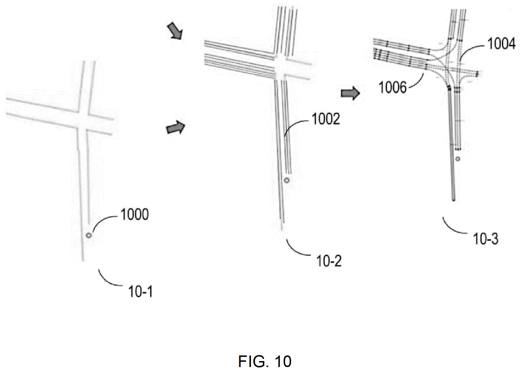

In some examples, the intersection attribute selection module 512 obtains more detailed information about the intersection, i.e., an intersection information subset 514 of the intersection, by providing the intersection's image features, intersection type, and intersection location to the traffic knowledge base 510. A more detailed description of the intersection attribute selection module 512 and the second map building module 518 will be described below in conjunction with FIGS. 8 and 10, respectively.

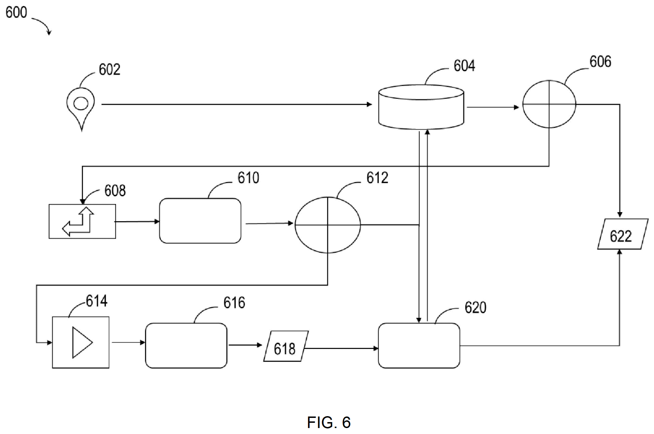

FIG. 6 shows a schematic diagram of an example 600 of generating the intersection type 622 according to some examples of the present disclosure. In example 600, the location 602 of the vehicle is provided to an intersection knowledge base 604, and a first judge 606 judges whether the intersection knowledge base 604 contains intersection information corresponding to the location 602. If so, it outputs the intersection type 622. For example, the intersection type 622 comprises the intersection type name (e.g., type A-32), the number of road directions (e.g., 4 road directions), and the number of lanes in each road direction (e.g., 4 lanes in each direction). If not, a first map 608 is provided to a first map checking tool 610 to check for similar intersections in the intersection knowledge base 604. In some examples, the first map checking tool 610 may obtain a road information subset based on the first map 608. This subset of road information may comprise, for example, the number of roads at an intersection, the number of directions, and the number of lanes on each road. If a second judge 612 judges that the first map checking tool 610 can acquire a road information subset from the first map 608, the subset of road information is provided to an intersection classifier 620. If the second judge 612 judges that the first map checking tool 610 cannot obtain a road information subset of the intersection from the first map 608, a video 614 is provided to an image encoder 616 to obtain extracted information 618 of the intersection.

In some examples, the image encoder 616 is an image classification network that is capable of extracting the number of roads, the number of road directions, and the number of lanes in each direction from the scene in the video 614 to output the extracted information 618 comprising this information. However, the extracted information 618 has a confidence score, and only extracted information 618 with a confidence score above a (predefined) confidence threshold is identified as a road information subset.

In example 600, the intersection classifier 620 checks the intersection knowledge base 604 based on the road information subset provided therein; if the intersection knowledge base 604 contains information cases similar to the road information subset, the intersection classifier 620 outputs the intersection type 622 of that intersection. If there is no intersection in the intersection knowledge base 604 that is similar to the road information subset, the location of the intersection (or the location of the vehicle 602) will be automatically saved in the intersection knowledge base 604 for subsequent manual labeling, and the manually labeled intersection information will be used as the intersection type 622.

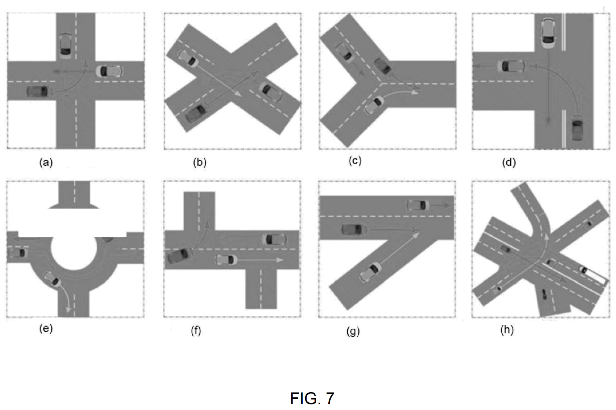

FIG. 7 shows the intersection types included in the intersection knowledge base according to some examples of the present disclosure. For example, in FIG. 7, the intersection knowledge base comprises (a) 4-way intersections, (b) X-intersections, (c) Y-intersections, (d) T-intersections, (e) roundabouts, (f) staggered intersections, (g) ramp merge entrances, and (h) 6-way intersections. The intersection knowledge base comprises, in addition to most intersection types, lane information corresponding to the intersection type.

**Table 1.Lane information table for the four-way intersection in FIG. 7**

| Direction | From north to south | From south to north | From west to east | From east to west |
|---|---|---|---|---|
| Lane code + turn | 1/ Go straight, then turn right | 1/ Go straight, then turn right | 1/ Go straight, then turn right | 1/ Go straight, then turn right |
| Information | 2/ Go straight, turn right, turn left | 1/ Go straight, then turn right | 1/ Go straight, then turn right | 1/ Go straight, then turn right |
| | 1 /... | 2/... | 1/... | 1/... |
| | 1 /... | 1/... | 2/... | 1/... |
| | 1 /... | 1/... | 1/... | 2/... |
| | ... | ... | ... | ... |

Taking the intersection in FIG. 7 as an example, its lane information in the intersection knowledge base is shown in Table 1. The intersection in Fig. 7 has four road directions, with two straight lanes in each direction. The intersection is classified as type A-32 in the intersection knowledge base, for example. The type is also a key in the intersection knowledge base, and its corresponding value is a typical attribute of an intersection of that type, such as lane length or radius of curvature of left-turn and right-turn lanes.

FIG. 8 shows a schematic diagram of an example 800 of generating an intersection information subset 818 of an intersection according to some examples of the present disclosure. In example 800, the intersection attribute selection module 512 comprises an image encoder 810 and a multilayer perceptron 812. A video 802 is provided to the intersection attribute selection module 512. The image encoder 810 and the multilayer perceptron 812 therein extract features 814 of the intersection images from the video 802 and provide the features 814 of the intersection images together with the location 806 of the vehicle and the intersection type 804 to a traffic knowledge base 816. The traffic knowledge base 816, based on the intersection information provided thereto, finds an intersection information subset 818 of the intersection and provides it to the intersection attribute selection module 512, and then the intersection attribute selection module 512 provides the intersection information subset 818 of the intersection to downstream modules.

In some examples, the intersection information subset 818 of the intersection is more detailed intersection information than the intersection type 804 and comprises the intersection type and other information of the intersection. For example, for an intersection of type A-32, the intersection information subset 818 comprises: the intersection type (intersection type name: type A-32, number of road directions: 4 road directions, number of lanes in each road direction: 4 lanes in each direction) and other information about the intersection (information other than the intersection type). Other information comprises, e.g., 1. There is usually a green belt between the right-turn lane and the main road; 2. The lane width is between 2.76 m and 3.24 m; 3.There is usually no visible left or right turn area; 4. There is usually a separate left-turn traffic light, meaning there are no unprotected left turns; 5. The stop line before the intersection is a double yellow line...... In some examples, the features 814 of an intersection image may comprise geometric features, such as intersection shape, number and layout of lanes (lane layout further comprises information such as whether the lanes are straight lanes, left-turn lanes, right-turn lanes, or reversible lanes), road curvature and slope, etc. In some examples, the features 814 of an intersection image may further comprise traffic facility features, such as traffic signs (e.g., speed limit signs, yield signs, prohibition signs, instruction signs, etc.), traffic markings (e.g., lane dividers, pedestrian crossings, stop lines, directional arrows, etc.), and traffic lights (e.g., the location, number, and color status (red, green, yellow) of the traffic lights and their corresponding control lanes, etc.). In some examples, the features 814 of an intersection image may further comprise traffic participant features, such as vehicles (e.g., the number, type, and driving status of vehicles at the intersection and the driving trajectory, speed, and relationship with motor vehicles and pedestrians of non-motorized vehicles), and pedestrians (e.g., the location, direction of walking, number, whether they are complying with traffic rules, etc.). In some examples, the features 814 of an intersection image may further comprise lighting and weather condition features, such as light intensity and direction and weather conditions (rain may cause the image to be blurred, snow may cover the road and objects with snow, and fog may severely affect visibility).

In some examples, the traffic knowledge base 816 contains most of the traffic information, such as normal lane width, lane attributes (e.g., left-turn lane, bus lane, etc.), and road markings (e.g., left turn, right turn, etc.). It also has some special information related to geographic information, such as the different traffic rules and road topology characteristics in different cities. For example, some cities have separate left-turn traffic lights and left-turn areas at large intersections.

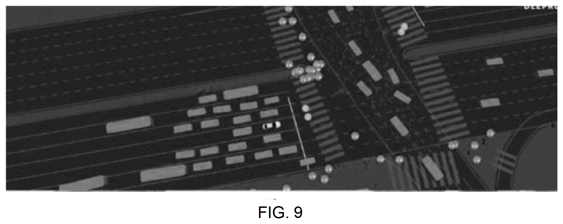

It is to be noted that the intersection knowledge base and traffic knowledge base provided in the present disclosure are not fixed and will be continuously updated. The ultimate goal is to register all scenarios that can be seen in the real world into these two knowledge bases so that intersection information in all scenarios can be obtained directly from the information tables of the knowledge bases through permutation and combination. The present disclosure facilitates the use of human common sense and generalizable traffic conditions and rules by providing an intersection knowledge base and a traffic knowledge base, which helps to better predict intersections and complex traffic scenarios and provides solutions for special traffic scenarios (e.g., extreme situations). It also enables the management and indexing of specific traffic rules and road conditions in corresponding areas by combining geographic information. In some examples, the intersection knowledge base and the traffic knowledge base may be provided individually or jointly by map data companies, autonomous driving technology companies, vehicle manufacturers, etc., and the present disclosure does not impose any limitations on this. One way to update the intersection and traffic knowledge base is, for example, as mentioned above, to manually label intersections not included in the knowledge base. Alternatively, during in-vehicle testing, if any previously unseen special intersections or traffic scenarios are discovered, the intersections can be manually registered and the intersection knowledge base and traffic knowledge base updated. For example, if the in-vehicle testing process encounters a complex intersection as shown in FIG. 9 (with 7 lanes on one road) and it is found that this type of intersection is not included in the intersection knowledge base, the intersection can be manually registered in the intersection knowledge base and the traffic knowledge base.

FIG. 10 shows a schematic diagram of generating virtual lane lines 1004 of an intersection according to some examples of the present disclosure. As shown in FIG. 10, the process of generating the virtual lane lines 1004 of the intersection at location 1000 can be divided into three stages. The first stage generates a first information level intersection 10-1, which comprises the intersection type. The second stage generates a second information level intersection 10-2, which comprises not only the intersection type but also other information about the intersection, such as the lane width of the lane 1002 and whether there is a green belt. It is an intersection that can be obtained after generating an intersection information subset of the intersection. The third stage generates a third information level intersection 10-3, which can be achieved, for example, by using the second map building module 518 shown in FIG. 5 to generate the third information level intersection 10-3 based on the second information level intersection 10-2.

In some examples, in order to generate the third information level intersection 10-3, the second map building module 518 determines road sampling points 1006 based on the type information in the first map 502 and the intersection information subset 514 of the intersection. For example, the road sampling points 1006 are simple but insufficiently accurate lane-level sampling points. The second map building module 518 further adjusts the road sampling points 1006 to further refine the sampling points based on some of the lane information in the intersection information subset 514 of the intersection and the features of the intersection image. In some examples, some of the lane information in the intersection information subset 514 of the intersection comprises lane width, boundary type, and topology information.

The second map building module 518 further connects the road sampling points 1006 to form virtual lane connection lines 1004 (or virtual lane connectors) based on lane turning information (which may come from the intersection information subset, open street maps, etc.). The second map building module 518 further adjusts the connection of the virtual lane lines 1004 based on some information in the traffic knowledge base and the features of the intersection image to further refine the virtual lane lines 1004, thereby generating the third information level intersection 10-3 and correspondingly generating the second map 314. In some examples, some of the information in the traffic knowledge base comprises the radius of curvature of curves, the locations of turning points, and common elements of various intersections.

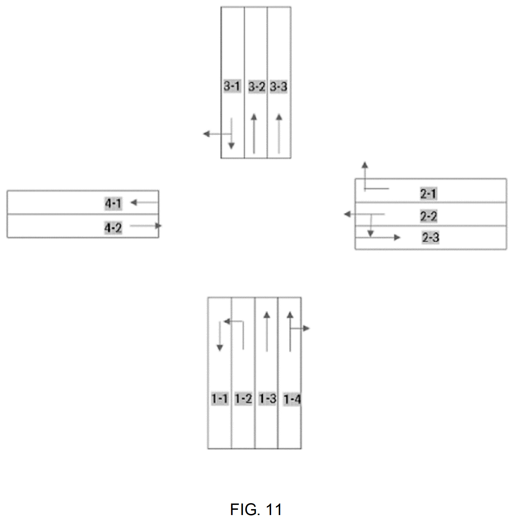

The following illustrates how road sampling points are connected in conjunction with FIG. 11, Table 2, and Table 3. FIG. 11 shows a schematic diagram of a four-way intersection on an open street map. Each lane in each segment of the four-way intersection has been assigned a lane code and lane turning information using an open street map. It can be seen that the lower section 1 of the four-way intersection comprises straight lane 1-1, left-turn lane 1-2, straight lane 1-3, and straight/right-turn lane 1-4, the upper section 3 comprises straight/right-turn lane 3-1, straight lane 3-2, and straight lane 3-3, the right section 2 comprises right-turn lane 2-1, straight/left-turn lane 2-2, and straight lane 2-3, and the left section 4 comprises straight turn lane 4-1 and straight lane 4-2.

In some examples, in order to obtain the connection relationships between each lane of the intersection, the turning information of each lane can be encoded and connection relationship matrix table 3 can be obtained using lane turning information encoding table 2. To build the lane turning information encoding table 2, straight lanes are coded as 0, right-turn lanes as 1, and left-turn lanes as 2. Lanes that are impassable are not coded and are entered as "-" in the table, thus obtaining Table 2. Lane turning information can also be encoded in other ways, and the present disclosure does not limit this. The values in the connection relationship matrix Table 3 can then be filled in based on Table 2. If the row lane and the column lane corresponding to the cell in the matrix table are connected, fill in 1; otherwise, leave it blank, thus obtaining the connection relationship matrix Table 3. The second map building module 518 shown in FIG. 5 can connect road sampling points based on the connection relationship matrix table to draw virtual lane lines.

**Table 2. Lane Turning Information Encoding Table**

| Lane ID | Lane Information | Related Roads | Related Lanes |
|---|---|---|---|
| 1-1 | - | - | - |
| 1-2 | 2 | 4 | 4-1 |
| 1-3 | 0 | 3 | 3-2;3-3 |
| 1-4 | 0,1 | 2,3 | 2-3;3-2;3-3 |
| 2-1 | 1 | 3 | 3-2;3-3 |
| 2-2 | 0 | 4 | 4-1 |
| 2-3 | - | - | - |
| 3-1 | 0,1 | 1,4 | 4-1;1-1 |
| 3-2 | - | - | - |
| 3-3 | - | - | - |
| 4-1 | - | - | - |
| 4-2 | 0 | 2 | 2-3 |

**Table 3. Connection Relationship Matrix Table**

| Lane ID | 1-1 | 1-2 | 1-3 | 1-4 | 2-1 | 2-2 | 2-3 | 3-1 | 3-2 | 3-3 | 4-1 | 4-2 |
|---|---|---|---|---|---|---|---|---|---|---|---|---|
| 1-1 | | | | | | | | 1 | | | | |
| 1-2 | | | | | | | | | | | 1 | |
| 1-3 | | | | | | | | | 1 | 1 | | |
| 1-4 | | | | | | | 1 | | 1 | 1 | | |
| 2-1 | | | | | | | | | 1 | 1 | | |
| 2-2 | | | | | | | | | | | 1 | |
| 2-3 | | | | 1 | | | | | | | | 1 |
| 3-1 | 1 | | | | | | | | | | 1 | |
| 3-2 | | | 1 | 1 | 1 | | | | | | | |
| 3-3 | | | 1 | 1 | 1 | | | | | | | |
| 4-1 | | 1 | | | | 1 | | 1 | | | | |
| 4-2 | | | | | | | 1 | | | | | |

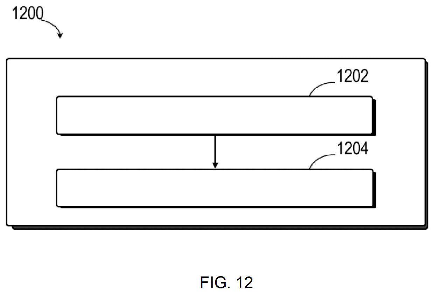

FIG. 12 shows an apparatus 1200 for generating a map of an intersection according to some examples of the present disclosure. As shown in FIG. 12, the apparatus 1200 comprises an intersection type generation unit 1202 and a second map generation unit 1204. The intersection type generation unit 1202 is configured to determine the intersection type based on intersection-related information and an intersection knowledge base. The intersection knowledge base contains information on various intersection types. The second map generation unit 1204 is configured to generate a second map of the intersection based on the intersection type and a first map of the intersection, the first map having lower informational richness and/or precision than the second map.

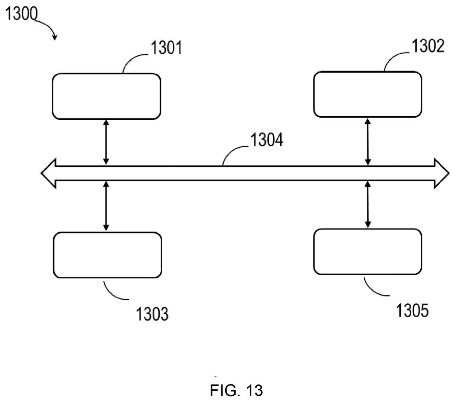

FIG. 13 shows a schematic diagram of a controller 1300 according to some examples of the present disclosure. As shown in FIG. 13, the controller 1300 comprises a processor 1301, which can perform various appropriate operations and processes according to computer program instructions stored in a read-only memory (ROM) 1302 and loaded into a random-access memory (RAM) 1303. Various programs and data required for the operation of the controller 1300 may also be stored in the RAM 1303. The processor 1301, the ROM 1302, and the RAM 1303 are interconnected through a bus 1304. An input/output (I/O) interface 1305 is also connected to the bus 1304.

The various processes and processing described above, such as the method 400, may be executed by the processor 1301. For example, in some examples, the method 400 can be implemented as a computer software program tangibly contained in a machine-readable medium. In some examples, part or all of the computer program may be loaded and/or installed onto the controller 1300 through the ROM 1302. When the computer program is loaded into the RAM 1303 and executed by the processor 1301. The present disclosure may be a method, apparatus, system, and/or computer program product. The computer program product may comprise a computer-readable storage medium uploaded with computer-readable program instructions for performing various aspects of the present disclosure.

The computer-readable storage medium may be a tangible device that maintains and stores instructions used by instruction execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: random access memory (RAM), read-only memory (ROM), erasable programmable read-only memory (EPROM or flash memory), static random access memory (SRAM), and any suitable combination of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein can be downloaded to respective computing/processing devices from a computer-readable storage medium or to an external computer or external storage device via a network, for example, the Internet, a local area network, a wide area network, and/or a wireless network. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in the computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. In the case of remote computers, the remote computer can be connected to the user's computer through any type of network - such as a local area network (LAN) or a wide area network (WAN) - or can be connected to an external computer (for example, through the Internet using an Internet Service Provider). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flow charts and/or block diagrams depicting methods, devices (systems), and computer program products according to the examples of the present disclosure. It should be understood that every block in the flow charts and/or block diagrams and the combinations of various blocks in the flow charts and/or block diagrams may be implemented by computer-readable program instructions.

These computer-readable program instructions may be provided to general-purpose computers, dedicated computers or the processing units of other programmable data processing devices, thereby producing a type of machine, such that when these instructions are executed by the computers or processing units of other programmable data processing devices, a device that realizes the functions/operations stipulated in one or more boxes in the flow charts and/or block diagrams is produced. These computer-readable program instructions may also be stored in computer-readable storage medium, enabling computers, programmable data processing devices, and/or other devices to operate in a specific manner. Therefore, the computer-readable media containing instructions comprise a manufactured product that includes instructions for implementing various aspects of the functions/operations specified in one or more boxes in the flow charts and/or block diagrams.

The computer-readable program instructions may also be loaded onto a computer, other programmable data processing devices, or other devices, enabling a series of operational steps to be executed on the computer, other programmable data processing devices, or other devices to generate a computer-implemented process. This enables the instructions executed on the computer, other programmable data processing devices, or other devices to implement the functions/operations specified in one or more boxes in the flow charts and/or block diagrams.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or operations, or implemented by using combinations of dedicated hardware and computer-executable instructions.

The various examples of the present disclosure have been described above. The above specification is exemplary and not exhaustive, and is not limited to the disclosed examples. Many modifications and variations will be apparent to those skilled in the art without departing from the scope and spirit of the described examples. The selection of terms used herein aims to best explain the principles and actual applications of various examples as well as the technological improvements in the technology in the market, or allow others of ordinary skill in the art to understand various examples disclosed herein.

## Claims

1. A method of generating a map of an intersection (400), comprising:
determining (402) the intersection type based on intersection-related information and an intersection knowledge base, the intersection knowledge base containing information on various types of intersections; and
generating (404) a second map of the intersection based on the intersection type and a first map of the intersection, the first map having lower informational richness and/or precision than the second map.

2. The method (400) according to Claim 1, the intersection-related information comprises the location of the vehicle, the intersection type comprises the type name, the number of road directions, and the number of lanes in each direction, and determining (402) the intersection type of the intersection based on the intersection-related information and the intersection knowledge base comprises:
in response to the existence of the location in the intersection knowledge base, determining the intersection type based on the intersection knowledge base; or
in response to the absence of the location in the intersection knowledge base, determining the intersection type based on the number of roads, the number of road directions, and the number of lanes in each direction of the intersection or based on manual labeling.

3. The method (400) according to Claim 2, wherein the intersection-related information further comprises a first map of the intersection and/or an intersection video, and in response to the absence of the location in the intersection knowledge base, determining the intersection type based on the number of roads, the number of road directions, and the number of lanes in each direction of the intersection and the intersection knowledge base or based on manual labeling comprises:
determining whether the intersection knowledge base contains a candidate intersection with the number of roads, the number of road directions, and the number of lanes in each direction of the intersection based on the first map and/or the intersection video;
in response to the intersection knowledge base containing a candidate intersection with the number of roads, the number of road directions, and the number of lanes in each direction, determining the intersection type of the candidate intersection as the intersection type; or
in response to the intersection knowledge base not containing a candidate intersection with the number of roads, the number of road directions, and the number of lanes in each direction, determining the intersection type based on the manual labeling.

4. The method (400) according to Claim 3, wherein determining whether the intersection knowledge base contains a candidate intersection with the number of roads, the number of road directions, and the number of lanes in each direction of the intersection based on the first map and/or the intersection video comprises:
determining the number of roads, the number of road directions, and the number of lanes in each direction of the intersection based on the first map and/or the intersection video; and
in response to the difference between the number of roads, the number of road directions, and the number of lanes in each direction of the intersection and the number of roads, the number of road directions, and the number of lanes in each direction of the candidate intersection being within a difference threshold, determining that the intersection knowledge base contains a candidate intersection having the number of roads, the number of road directions, and the number of lanes in each direction; or
in response to the difference between the number of roads, the number of road directions, and the number of lanes in each direction of the intersection and the number of roads, the number of road directions, and the number of lanes in each direction of the candidate intersection being larger than a difference threshold, determining that the intersection knowledge base does not contain a candidate intersection having the number of roads, the number of road directions, and the number of lanes in each direction.

5. The method (400) according to Claim 4, wherein determining the number of roads, the number of road directions, and the number of lanes in each direction of the intersection based on the first map and/or the intersection video comprises:
in response to the ability to obtain the number of roads, the number of road directions, and the number of lanes in each direction from the first map, determining the number of roads, the number of road directions, and the number of lanes in each direction of the intersection; or
in response to the inability to obtain the number of roads, the number of road directions, or the number of lanes in each direction from the first map, determining the number of roads, the number of road directions, and the number of lanes in each direction of the intersection based on the intersection video. And

6. the method (400) according to Claim 5, wherein determining the number of roads, the number of road directions, and the number of lanes in each direction of the intersection based on the intersection video comprises:
using an image classification network to determine the scenario-based number of roads, the number of road directions, and the number of lanes in each direction of the intersection based on the scenario in the intersection video;
in response to a scenario-based confidence score of the number of roads, the number of road directions, and the number of lanes in each direction being higher than a predefined threshold, determining the scenario-based number of roads, the number of road directions, and the number of lanes in each direction as the number of roads, the number of road directions, and the number of lanes in each direction of the intersection.

7. The method (400) according to Claim 3, wherein determining the intersection type based on the manual labeling comprises:
storing the location in the intersection knowledge base;
storing a candidate intersection manually labeled for the location in the intersection knowledge base; and
determining the manually labeled candidate intersection as the intersection type.

8. The method (400) according to Claim 1, wherein generating (404) a second map of the intersection based on the intersection type and a first map of the intersection comprises:
determining virtual lane lines of the intersection based on the intersection type, the first map, the locations of vehicles, the intersection video, and a traffic knowledge base to generate the second map.

9. The method (400) according to Claim 8, wherein determining the virtual lane lines of the intersection based on the intersection type, the first map, the locations of vehicles, the intersection video, and the traffic knowledge base comprises:
extracting features of the intersection image from the intersection video;
providing the features of the intersection image, the intersection type, and the location to the traffic knowledge base;
finding other information about the intersection through the traffic knowledge base based on the features of the intersection image, the intersection type, and the location, wherein the other information is information other than the intersection type; and
determining the virtual lane lines of the intersection based on the first map, the traffic knowledge base, the intersection type, the other information, and the features of the intersection image.

10. The method (400) according to Claim 9, wherein determining the virtual lane lines of the intersection based on the first map, the traffic knowledge base, the intersection type, the other information, and the features of the intersection image comprises:
determining road sampling points based on the first map and the intersection type;
adjusting the road sampling points based on the other information and the features of the intersection image;
connecting the road sampling points based on lane turning information; and
adjusting the connection based on the traffic knowledge base and the features of the intersection image to determine the virtual lane lines of the intersection.

11. The method (400) according to Claim 10, wherein adjusting the road sampling points based on the other information and the features of the intersection image comprises:
adjusting the road sampling points based on the lane width, boundary type, and topology information in the other information and the features of the intersection image.

12. The method (400) according to Claim 10, adjusting the connection to determine the virtual lane lines of the intersection based on the traffic knowledge base and the features of the intersection image comprises:
adjusting the connection to determine the virtual lane lines of the intersection based on the radius of curvature of curves, turning point positions, and common elements of various intersections in the traffic knowledge base.

13. An apparatus (1200) for generating a map of an intersection, comprising:
an intersection type determination unit (1202) configured to determine (1202) the intersection type of an intersection based on intersection-related information and an intersection knowledge base, the intersection knowledge base containing information on various types of intersections; and
a second map generation unit (1204), which generates (1204) a second map of the intersection based on the intersection type and a first map of the intersection, the first map having lower informational richness and/or precision than the second map.

14. A controller (1300), comprising:
at least one processor (1301);
a memory (1302) coupled to the at least one processor (1301) and having instructions stored thereon, the instructions, when executed by the at least one processor (1301), causing the controller (1300) to perform the method according to any one of Claims 1 to 13.

15. A vehicle, comprising the controller according to Claim 14, the controller being capable of performing the method according to any one of Claims 1 to 13.

16. A computer program product, comprising a computer program, wherein the computer program is executed by a processor to implement the method according to any one of Claims 1 to 13.

17. A computer-readable storage medium comprising computer-executable instructions, wherein the computer-executable instructions are used to cause the processor to perform the method according to any one of Claims 1 to 13.
